# EUROPÄISCHE PATENTSCHRIFT

(11) **EP 1 060 345 B1**
(45) Veröffentlichungstag und Bekanntmachung des Hinweises auf die Patenterteilung: **28.08.2002**
(21) Anmeldenummer: 99916765.3
(22) Anmeldetag: 26.02.1999
(51) Int. Cl.: F22B 1/18, F22B 37/00, B01D 53/86

(54) **VERFAHREN ZUM BETREIBEN EINER GAS- UND DAMPFTURBINENANLAGE SOWIE DERARTIGE ANLAGE**
METHOD FOR OPERATING A GAS AND STEAM TURBINE INSTALLATION AND THE GAS AND STEAM TURBINE INSTALLATION
PROCEDE PERMETTANT D'ACTIONNER UNE INSTALLATION DE TURBINE A GAZ ET A VAPEUR ET L'INSTALLATION DE TURBINE A GAZ ET A VAPEUR

(30) Priorität: 02.03.1998 DE 19808722
(43) Veröffentlichungstag der Anmeldung: 20.12.2000
(73) Patentinhaber: SIEMENS AKTIENGESELLSCHAFT, 80333 München (DE)
(72) Erfinder: RAMSTETTER, Asbjoern, D-91074 Herzogenaurach (DE); SIGLING, Ralf, D-91083 Baiersdorf (DE)
(86) Internationale Anmeldenummer: DE9900530
(87) Internationale Veröffentlichungsnummer: WO99045320

(56) Entgegenhaltungen:
- GB-A- 2 082 084
- US-A- 4 473 536

## Beschreibung

Die Erfindung bezieht sich auf ein Verfahren zum Betreiben einer derartigen Gas- und Dampfturbinenanlage gemäß dem Oberbegriff des Anspruchs 1 sowie auf eine danach arbeitende Anlage.

Bei einer Gas- und Dampfturbinenanlage wird die im entspannten Arbeitsmittel aus der Gasturbine enthaltene Wärme zur Erzeugung von Dampf für die Dampfturbine genutzt. Die Wärmeübertragung erfolgt in einem der Gasturbine nachgeschalteten Abhitzedampferzeuger, in dem Heizflächen in Form von Rohren oder Rohrbündeln angeordnet sind. Diese wiederum sind in den Wasser-Dampf-Kreislauf der Dampfturbine geschaltet. Der Wasser-Dampf-Kreislauf umfaßt üblicherweise mehrere, beispielsweise zwei, Druckstufen, wobei jede Druckstufe üblicherweise eine Vorwärm-Heizfläche (Economizer), eine Verdampfer-Heizfläche und eine Überhitzer-Heizfläche aufweist.

Zur Stickoxidminderung der Rauchgase der Gasturbine einer derartigen Gas- und Dampfturbinenanlage kann das Verfahren der Selektiven Katalytischen Reduktion, das sogenannte SCR-Verfahren, eingesetzt werden. Bei dem SCR-Verfahren werden Stickoxide (NOₓ) mit Hilfe eines Reduktionsmittels und eines Katalysators zu Stickstoff (N₂) und Wasser (H₂O) reduziert.

Bei einer für ein SCR-Verfahren ausgelegten Gas- und Dampfturbinenanlage ist üblicherweise im Abhitzedampferzeuger ein Katalysator angeordnet. Dieser Katalysator dient dazu, eine Reaktion zwischen dem in das Rauchgas eingebrachten Reduktionsmittel und den Stickoxiden des Rauchgases einzuleiten und/oder aufrechtzuerhalten.

Wie aus der US-PS 4,473,536 bekannt, kann das zum Verfahren benötigte Reduktionsmittel mit von einem Luftvordichter oder Gebläse erzeugter Luft als Trägerstrom in das den Abhitzedampferzeuger durchströmende Rauchgas der Gasturbine eingedüst werden, wobei die einzudüsende Reduktions-mittelmenge durch Regelung der Luftmange in Abhängigkeit vom Rauchgasmassenstrom aus der Gasturbine variiert werden kann.

Die Stickoxidemission der Gasturbine ist jedoch in der Regel beim Ölbetrieb höher als beim Gasbetrieb. Um die gesetzlich vorgeschriebenen Grenzwerte einzuhalten, ist somit für den ölbetrieb der Gasturbine die einzudüsende Reduktionsmittelmenge größer als beim Gasbetrieb. Dabei kann jedoch aufgrund einer durch die Eindüsung des Reduktionsmittel-Luft-Gemisches hervorgerufenen unerwünschten Abkühlung des Rauchgases der Wirkungsgrad der Gas- und Dampfturbinenanlage je nach Betriebszustand in unterschiedlich hohem Maß beeinträchtigt sein.

Der Erfindung liegt die Aufgabe zugrunde, ein Verfahren zum Betreiben einer Gas- und Dampfturbinenanlage anzugeben, mit dem mit besonders geringem technischen Aufwand und ohne aufwendiges Regelsystem bei allen Betriebszuständen der Gasturbine ein besonders hoher Wirkungsgrad gewährleistet ist. Zudem soll eines zur Durchführung des Verfahrens besonders geeignete Anlage angegeben werden.

Diese Aufgabe wird erfindungsgemäß gelöst, indem das Dosiersystem zwei Luftverdichter aufweist, deren Förderleistung in Abhängigkeit von der Brennstoffart des der Gasturbine zugeführten Brennstoffs eingestellt wird.

Die Erfindung geht dabei von der Überlegung aus, daß ein besonders hoher Wirkungsgrad der Gas- und Dampfturbinenanlage gegeben ist, wenn die von dem Rauchgas der Gasturbine für den Abhitzedampferzeuger bereitgestellte Wärme nahezu vollständig für den Dampfprozeß nutzbar ist. Daher sollte beim SCR-Verfahren die Trägerluftmenge besonders gering gehalten werden. Die Trägerluftmenge sollte also in Abhängigkeit von der Brennstoffart für die Gasturbine an die einzubringende Reduktionsmittelmenge anpaßbar sein. Eine besonders einfache Steuerung der Trägerluftmenge läßt sich erreichen, indem die Förderleistung der Luftverdichter in Abhängigkeit von der Brennstoffart des der Gasturbine zugeführten Brennstoffs einstellbar ist.

Vorteilhafterweise ist dabei ein erster Luftverdichter einem zweiten Luftverdichter parallel geschaltet. In dieser Ausgestaltung sind der erste und der zweite Luftverdichter sowohl gleichzeitig als auch alternativ betreibbar. Beim Gasbetrieb sind dann ein Luftverdichter und beim Ölbetrieb der Gasturbine beide Luftverdichter betreibbar. Voraussetzung hierfür ist allerdings eine entsprechende Auslegung der Luftverdichter. Auf diese Weise ist die erforderliche Trägerluftmenge besonders einfach einstellbar.

Jeder Luftverdichter weist vorteilhafterweise in Bezug auf die Förderleistung der Luft einen drehzahlgeregelten Antrieb auf. Die Steuerung der Förderleistung der Luft ist in dieser Ausgestaltung sowohl über die Anzahl als auch über die jeweiligen drehzahlgeregelten Antriebe möglich. Damit kann die einzudüsende Trägerluftmenge zusätzlich besonders gut an verschiedene Brennstoffarten des der Gasturbine zugeführten Brennstoffs angepaßt werden.

Bezüglich der Gas- und Dampfturbinenanlage mit einem einer sowohl mit Gas als auch mit Öl als Brennstoff betreibbaren Gasturbine nachgeschalteten Abhitzedampferzeuger, in dem ein Katalysator zur katalytischen Reinigung des entspannten Arbeitsmediums aus der Gasturbine angeordnet ist, und mit einem Dosiersystem zur Einbringung eines Reduktionsmittels in das Arbeitsmedium wird die genannte Aufgabe gelöst, indem das Dosiersystem zur Beaufschlagung des Reduktionsmittels mit Trägerluft zwei unabhängig voneinander absperrbare, ausgangsseitig an einen gemeinsamen Mischraum angeschlossene Luftleitungen umfaßt, in die jeweils ein Luftverdichter geschaltet ist.

Die mit der Erfindung erzielten Vorteile bestehen insbesondere darin, daß durch die Luftverdichter eine einstellbare Luftzufuhr für das Dosiersystem mit besonders geringem technischen Aufwand gewährleistet ist. Durch die einstellbare Luftzufuhr in Abhängigkeit von der Brennstoffart des der Gasturbine zugeführten Brennstoffs fällt die durch das SCR-Verfahren bedingte Kühlung des den Abhitzedampferzeuger durchströmenden Rauchgases bei allen Betriebszuständen der Gasturbine besonders gering aus. Somit ist bei allen Betriebszuständen der Gasturbinenanlage ein besonders hoher Wirkungsgrad der Gas- und Dampfturbinenanlage gewährleistet.

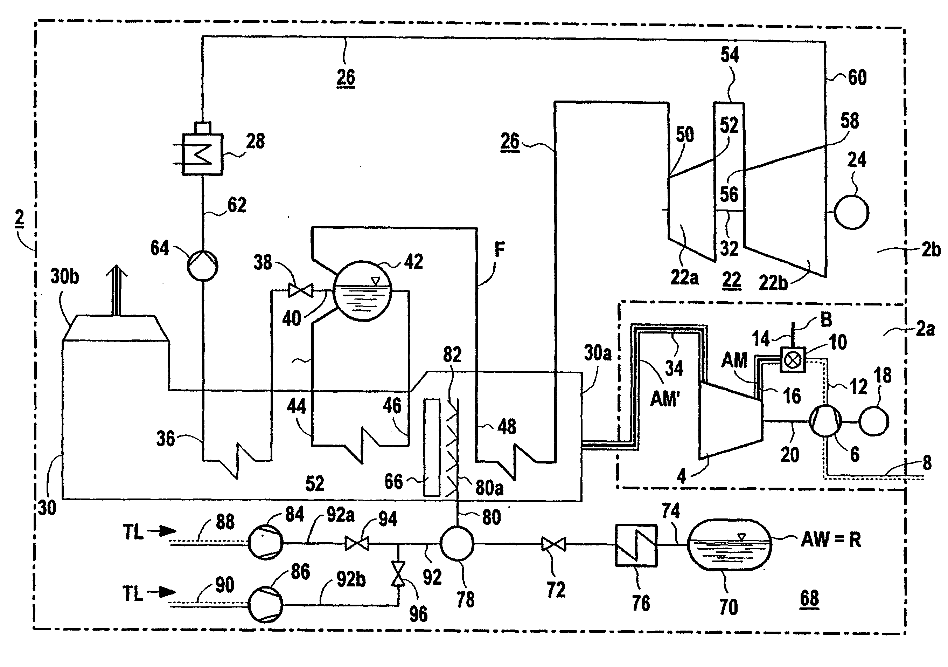

Ein Ausführungsbeispiel der Erfindung wird anhand einer Zeichnung näher erläutert. Darin zeigt die Figur schematisch eine Gas- und Dampfturbinenanlage.

Die Gas- und Dampfturbinenanlage 2 gemäß der Figur umfaßt eine Gasturbinenanlage 2a und eine Dampfturbinenanlage 2b. Die Gasturbinenanlage 2a umfaßt eine Gasturbine 4 mit angekoppeltem Luftverdichter 6. Der Luftverdichter 6 ist eingangsseitig an eine Ansaugluftleitung 8 angeschlossen. Der Gasturbine 4 ist eine Brennkammer 10 vorgeschaltet, die an eine Frischluftleitung 12 des Luftverdichters 6 angeschlossen ist. In die Brennkammer 10 der Gasturbine 4 mündet eine Brennstoffleitung 14. Über diese kann der Gasturbine 4 Öl oder Gas als Brennstoff B zugeführt werden. Zum Zuführen von Arbeitsmedium AM von der Brennkammer 10 in die Gasturbine 4 ist eine Leitung 16 vorgesehen. Die Gasturbine 4 und der Luftverdichter 6 sowie ein Generator 18 sitzen auf einer gemeinsamen Welle 20.

Die Dampfturbinenanlage 2b umfaßt eine Dampfturbine 22 mit angekoppeltem Generator 24 und in einem Wasser-Dampf-Kreislauf 26 einen der Dampfturbine 22 nachgeschalteten Kondensator 28 sowie einen horizontal angeordneten Abhitzedampferzeuger 30. Die Dampfturbine 22 besteht aus einer ersten Druckstufe oder einem Hochdruckteil 22a und einer zweiten Druckstufe oder einem Niederdruckteil 22b, die über eine gemeinsame Welle 32 den Generator 24 antreiben.

Zum Zuführen von in der Gasturbine 4 entspanntem Arbeitsmedium AM' oder Rauchgas in den Abhitzedampferzeuger 30 ist eine Abgasleitung 34 an einen Eingang 30a des Abhitzedampferzeugers 30 angeschlossen. Das Rauchgas aus der Gasturbine 4 verläßt den Abhitzedampferzeuger 30 über dessen Ausgang 30b in Richtung auf einen nicht näher dargestellten Kamin.

Der Abhitzedampferzeuger 30 umfaßt in einer ersten Druckstufe oder Hochdruckstufe des Wasser-Dampf-Kreislaufs 26 einen Hochdruckvorwärmer oder Economizer 36, der über eine mit einem Ventil 38 absperrbare Leitung 40 an eine Hochdrucktrommel 42 angeschlossen ist. Die Hochdrucktrommel 42 ist mit einem im Abhitzedampferzeuger 30 angeordneten Hochdruckverdampfer 44 zur Bildung eines Wasser-Dampf-Umlaufs 46 verbunden. Zum Abführen von Frischdampf F ist die Hochdrucktrommel 42 an einen im Abhitzedampferzeuger 30 angeordneten Hochdrucküberhitzer 48 angeschlossen. Dieser ist ausgangsseitig mit dem Dampfeinlaß 50 des Hochdruckteils 22a der Dampfturbine 22 verbunden.

Der Dampfauslaß 52 des Hochdruckteils 22a der Dampfturbine 22 ist über eine Überströmleitung 54 mit dem Dampfeinlaß 56 des Niederdruckteils 22b der Dampfturbine 22 verbunden. Der Dampfauslaß 58 des Niederdruckteils 22b der Dampfturbine 22 ist über eine Dampfleitung 60 an den Kondensator 28 angeschlossen. Dieser ist über eine Speisewasserleitung 62, in die eine Speisewasserpumpe 64 geschaltet ist, mit dem Economizer 36 verbunden, so daß ein geschlossener Wasser-Dampf-Kreislauf 26 entsteht.

Im Ausführungsbeispiel gemäß der Figur ist somit lediglich die erste Druckstufe des Wasser-Dampf-Kreislaufs 26 detailliert dargestellt. Im Abhitzedampferzeuger 30 können jedoch noch weitere, nicht näher dargestellte Heizflächen angeordnet sein, die jeweils einer Mittel- oder einer Niederdruckstufe des Wasser-Dampf-Kreislaufs 26 zugeordnet sein können. Diese Heizflächen sind in geeigneter Weise mit dem Dampfeinlaß 56 des Niederdruckteils 22b der Dampfturbine 22 verbunden.

Zur katalytischen Reinigung des Rauchgases der Gasturbine 4 von Stickoxiden (NOₓ) ist bei der Gas- und Dampfturbinenanlage 2 der Einsatz des Verfahrens der Selektiven Katalytischen Reduktion, das sogenannte SCR-Verfahren, vorgesehen. Bei dem SCR-Verfahren werden Stickoxide (NOₓ) mit Hilfe eines Katalysators und eines Reduktionsmittels R zu Stickstoff (N₂) und Wasser (H₂O) reduziert.

Zur Durchführung des SCR-Verfahrens ist im Abhitzedampferzeuger 30 ein als DeNOₓ-Katalysator ausgebildeter Katalysator 66 im Strömungsbereich für das Rauchgas zwischen dem Hochdruckverdampfer 44 und dem Hochdrucküberhitzer 48 angeordnet. Zur Einbringung von Ammoniak-Wasser AW als Reduktionsmittel R in den Abhitzedampferzeuger 30 weist die Dampfturbinenanlage 2b ein Dosiersystem 68 auf.

Das Dosiersystem 68 umfaßt einen Vorratsbehälter 70 für Ammoniak-Wasser AW. Aus diesem gelangt Ammoniak-Wasser AW über eine mit einem Ventil 72 absperrbare Leitung 74, in die ein Verdampfer 76 geschaltet ist, in einen Mischraum 78 des Dosiersystems 68. Im Mischraum 78 findet eine Mischung von Luft und im Verdampfer 76 verdampftem Ammoniak-Wasser AW statt. An den Mischraum 78 ist eine in den Abhitzedampferzeuger 30 mündende Zustromleitung 80 angeschlossen. Die Zustromleitung 80 dient zum Zuführen des mit Trägerluft TL vermischten verdampften Ammoniak-Wassers AW in den Abhitzedampferzeuger 30. Zur homogenen Einbringung des Ammoniak-Luftgemisches in den Abhitzedampferzeuger 30 sind eine Anzahl von Düsen 82 an das Ende 80a der Zustromleitung 80 angeschlossen. Alternativ kann bei dem Dosiersystem 68 auch die Einbringung von druckverflüssigtem Ammoniak (NH₃) oder Harnstofflösung als Vorstufe des nicht geruchsneutralen Ammoniaks (NH₃) vorgesehen sein.

Zur Zuführung der Trägerluft TL in den Mischraum 78 umfaßt das Dosiersystem 68 zwei Luftverdichter 84 bzw. 86. Den Luftverdichtern 84, 86 ist jeweils eine Luftansaugleitung 88 bzw. 90 vorgeschaltet. Der Luftverdichter 84 ist an eine Luftleitung 92a, der Luftverdichter 86 an eine Luftleitung 92b angeschlossen. Die Luftleitung 92a ist mit einem Ventil 94, die Luftleitung 92b mit einem Ventil 96 verschließbar. Die Luftleitung 92a und die Luftleitung 92b vereinigen sich in eine gemeinsame Luftleitung 92, die in den Mischraum 78 mündet.

Eine im Ausführungsbeispiel nicht näher dargestellte Umschalteinrichtung bewirkt, daß in Abhängigkeit von dem der Gasturbine 4 zugeführten Brennstoff B nur einer oder beide Luftverdichter 84, 86 gleichzeitig betreiben werden.

Beim Betrieb der Gas- und Dampfturbinenanlage 2 werden in Abhängigkeit von der Brennstoffart des der Gasturbine 4 zugeführten Brennstoffs entweder nur einer der beiden Luftverdichter 84, 86 oder beide eingesetzt. Im allgemeinen ist im Gegensatz zum Gasbetrieb beim Ölbetrieb aufgrund der besonders hohen Stickoxidemission der Gasturbine 4 ein höherer Abscheidegrad der Stickoxide (NOₓ) erforderlich. Beim Gasbetrieb der Anlage hingegen ist die entstehende Stickoxidmenge deutlich geringer. Dadurch ist auch die einzudüsende Einspeiserate des Ammoniak-Wassers AW abhängig von der Brennstoffart des die Gasturbine 4 betreibenden Brennstoffs B. Dementsprechend wird beim Gasbetrieb lediglichnur einer der Luftverdichter 84, 86 eingesetzt. Beim Ölbetrieb der Gas- und Dampfturbinenanlage 2 werden hingegen beide Luftverdichter 84 und 86 eingesetzt. Die Luftverdichter 84 und 86 sind dabei derart ausgelegt, daß beim Gasbetrieb der Anlage der Betrieb eines einzelnen Luftverdichters ausreichend für den Betrieb des Dosiersystems 68 ist. Alternativ oder zusätzlich können die Luftverdichter 84, 86 auch einen drehzahlgeregelten Antrieb aufweisen, über den die Steuerung der Förderleistung der Trägerluft TL erfolgt.

Dadurch, daß das Dosiersystem 68 zwei Luftverdichter 84 und 86 aufweist, ist mit besonders geringem technischen Aufwand eine besonders hohe Flexibilität bei der Zufuhr von Trägerluft TL für das Dosiersystem 68 möglich. Auf diese Weise ist bei allen Betriebszuständen der Gas- und Dampfturbinenanlage 2 ein besonders hoher Wirkungsgrad des für ein SCR-Verfahren ausgelegten Abhitzedampferzeugers 30 der Dampfturbinenanlage 2b möglich.

## Patentansprüche

1. Verfahren zum Betreiben einer Gas- und Dampfturbinenanlage (2), bei der die im entspannten Arbeitsmedium (AM') aus der mit einem Brennstoff (B) betriebenen Gasturbine (4) enthaltene Wärme zur Erzeugung von Dampf (F) für die Dampfturbine (22) genutzt wird, wobei zur katalytischen Reinigung des Arbeitsmediums (AM') in dieses ein Reduktionsmittel (R) über ein Dosiersystem (68) unter Zufuhr einer einstellbaren Trägerluftmenge (TL) eingebracht wird,
**dadurch gekennzeichnet, dass** die Trägerluftmenge (TL) in Abhängigkeit von der Brennstoffart des der Gasturbine (4) zugeführten Brennstoffs (B) eingestellt wird, wobei zur Steuerung der Trägerluftmenge (TL) bei Gasbetrieb der Gasturbine (4) nur ein erster Luftverdichter (84,86) und bei Ölbetrieb der Gasturbine (4) zusätzlich ein dem ersten Luftverdichter (84) parallel geschalteter zweiter Luftverdichter (86) eingesetzt wird.

2. Gas- und Dampfturbinenanlage (2) mit einem einer sowohl mit Gas als auch mit Öl als Brennstoff (B) betreibbaren Gasturbine (4) nachgeschalteten Abhitzedampferzeuger (30), in dem ein Katalysator (66) zur katalytischen Reinigung des entspannten Arbeitsmediums (AM') aus der Gasturbine (4) angeordnet ist, und mit einem Dosiersystem (68) zur Einbringung eines Reduktionsmittels (R) in das Arbeitsmedium (AM'),
wobei das Dosiersystem (68) zur Beaufschlagung des Reduktionsmittels (R) mit Trägerluft (TL) zwei unabhängig voneinander absperrbare, ausgangsseitig an einen gemeinsamen Mischraum (78) angeschlossene Luftleitungen (92a, 92b) umfasst, in die jeweils ein Luftverdichter (84 bzw. 86) geschaltet ist.

## Claims

1. Method of operating a gas turbine and steam turbine installation (2), in which the heat contained in the expanded working medium (AM') from the gas turbine (4), which is operated by a fuel (B), is used to generate steam (F) for the steam turbine (22), a reducing agent (R) being introduced by means of a metering system (68), with the supply of an adjustable quantity of carrier air (TL), into the working medium (AM') for the catalytic cleaning of the latter, **characterized in that** the quantity of carrier air (TL) is adjusted as a function of the type of fuel (B) supplied to the gas turbine (4), only a first air compressor (84, 86) being employed for controlling the quantity of carrier air (TL) in the case of gas operation of the gas turbine (4) and a second air compressor (86), which is connected in parallel with the first air compressor (84), being additionally employed in the case of oil operation of the gas turbine (4).

2. Gas turbine and steam turbine installation (2), having a waste-heat steam generator (30) installed downstream of a gas turbine (4) which can be operated both with gas and with oil as the fuel (B), in which steam generator a catalyser (66) is arranged for the catalytic cleaning of the expanded working medium (AM') from the gas turbine (4), and having a metering system (68) for the introduction of a reducing agent (R) into the working medium (AM'), the metering system (68) comprising, in order to act upon the reducing agent (R) with carrier air (TL), two air conduits (92a, 92b) which can be shut off independently of each other, are connected on the output side to a common mixing space (78) and into which a respective air compressor (84 and 86) is connected.

## Revendications

1. Procédé pour faire fonctionner une installation (2) de turbine à gaz et de turbine à vapeur, dans lequel on tire profit, pour produire de la vapeur (F) pour la turbine (22) à vapeur, de la chaleur contenue dans le fluide (AM') de travail détendu sortant de la turbine (4) à gaz fonctionnant à l'aide d'un combustible (B), en introduisant pour l'épuration catalytique du fluide (AM') de travail dans ce dernier un agent (R) réducteur par un système (68) de dosage avec apport d'une quantité (TL) d'air porteur qui peut être réglée,
**caractérisé en ce que** l'on règle la quantité (TL) d'air porteur en fonction de la nature du combustible (B) apporté à la turbine (4) à gaz en n'utilisant, pour commander la quantité (TL) d'air porteur lors du fonctionnement au gaz de la turbine (4) à gaz, qu'un premier compresseur (84, 86) d'air et, lors du fonctionnement au pétrole de la turbine (4) gaz, en plus un deuxième compresseur (86) d'air monté en parallèle au premier compresseur (84) d'air.

2. Installation (2) de turbine à gaz et de turbine à vapeur comprenant un générateur (30) de vapeur de récupération monté en aval d'une turbine (4) à gaz pouvant fonctionner tant au gaz qu'au pétrole comme combustible (4), dans laquelle il est prévu un catalyseur (66) pour l'épuration catalytique du milieu (AM') de travail détendu sortant de la turbine à gaz, et l'installation comprend un système (68) de dosage pour l'apport d'un agent (R) réducteur au fluide (AM') de travail, le système (68) de dosage comprenant, pour l'alimentation de l'agent (R) réducteur en air (TL) porteur, deux conduits (92a, 92b) d'air, qui peuvent être fermés indépendamment l'un de l'autre, qui sont raccordés du côté de la sortie à une chambre (78) commune de mélange et dans chacun desquels est monté respectivement un compresseur (84 et 86) d'air.
